# EUROPEAN PATENT SPECIFICATION

(11) **EP 1 833 212 B1**
(45) Date of publication and mention of the grant of the patent: **07.01.2009**
(21) Application number: 07103477.1
(22) Date of filing: 05.03.2007
(51) Int. Cl.: H04L 12/56

(54) **Apparatus for routing data packets by constructing groups of data sets, for a node of a very high data rate communications network**
Vorrichtung zur Leitweglenkung von Datenpaketen mittels Konstruktion von Datensätzegruppen, für einen Knoten eines Telekommunikationsnetzwerkes mit sehr hoher Datenrate
Dispositif d'aiguillage de paquets de données par constitution de groupes d'ensembles de données, pour un noeud d'un réseau de communication a très haut débit

(30) Priority: 10.03.2006 FR 0650810
(43) Date of publication of application: 12.09.2007
(73) Proprietor: Alcatel Lucent, 75008 Paris (FR)
(72) Inventor: Noirie, Ludovic, 91620, Nozay (FR)
(74) Representative: Thibaud, Jean-Baptiste

(56) References cited:
- EP-A- 1 619 835
- EP-A2- 1 052 816
- WO-A2-03/090416

## Description

The invention relates to very high data rate communications networks, and more precisely, to routing apparatus that is used in the nodes of such networks for the purpose of routing data packets to their respective destinations.

The term "packet" is used herein to mean a data set grouping together in a pre-established format both information data to be transmitted, or "payload" data, and also auxiliary data contained, for example, in a header. The header contains, in particular, an item of information representative of the destination of the packet and generally a class of quality of service (QoS). The item of information may be an explicit destination address or a label representative of said destination. The most common packet formats include, for example, Internet Protocol (IP) packets, Multi-Protocol Label Switching (MPLS) packets, Ethernet packets, which are of variable size, and Asynchronous Transfer Mode (ATM) packets, which are of fixed size.

As is known by the person skilled in the art, a data packet routing architecture may be composed of a single stage having line cards at its inlet and at its outlet, it being possible for such line cards to offer data rates of 10 gigabits per second (Gbps). In order to achieve very high switching (or routing) data rates, such as, for example, of around 10 tetrabits per second (Tbps), it is necessary to set up in parallel at least 1000 10-Gbps line cards at the inlet and at the outlet. This is very difficult to achieve in practice, be it for implementing a central switch or for implementing control over the assembly made up of the central switch and of the line cards, because of the very large number of inlets and outlets attached to the central switch.

For this reason, when a very large number of line cards are to be interconnected, it is preferable to use a multi-stage architecture made up, for example, of three stages: namely a first stage for "pre-routing to its outlets the data that it receives at its inlets in the form of packets, a second stage for routing to its outlets the pre-routed data received at its inlets, and a third stage for "post-routing" to its outlets the routed data received at its inlets.

Such an architecture is described, in particular, in the document entitled "Cisco carrier routing system" accessible at the Internet address "http://www.cisco.com/ en/US/products/ps5763/index.html".

This architecture gives rise to at least two drawbacks. It is firstly very costly due to the very large switching capacity that it is necessary to add in order to prevent bottlenecks (typically +200% to +250%). Finally it requires re-ordering of the groups of routed data upstream of the outlets, thereby significantly increasing its complexity.

WO 03/090416 A2 discloses a packet switch in accordance with the preamble of claim 1.

An object of the invention is thus to improve the situation.

To this end, it provides data packet routing apparatus for a node of a communications network, which apparatus comprises: i) a first stage comprising N parallel inlet sub-stages, each of which serves to pre-route to J outlets of said inlet sub-stage data received at the inlets in the form of packets; ii) a second stage comprising J parallel routing blocks, each of which serves to route to at least N outlets pre-routed data received at at least N inlets; and iii) a third stage comprising Q parallel outlet sub-stages, each of which serves to post-route to outlets routed data received at J inlets.

This routing apparatus is characterized in that its first stage serves to create over a cycle comprising M periods (or clock ticks (e.g. a cycle of 10 µs comprises 200 clock ticks of about 50 ns each)) groups of J sets with data sets waiting to be routed within the same inlet sub-stage and whose destination is one of the outlet sub-stages, and to distribute the J sets of each group, having the same inlet sub-stage and the same outlet sub-stage, to the J routing blocks that are all placed in the same routing configuration so that they route them in parallel and in a synchronized manner to a destination outlet sub-stage, it being possible for said routing configuration of the J routing blocks to be modified at every clock tick so that, during a cycle of M clock ticks (or periods), each of the outlet sub-stages may receive all of the groups of data sets that it is to post-route.

The fact that data sets are constructed that have the same inlet sub-stage and the same outlet sub-stage, and that the elements of each of said sets are distributed to the J routing blocks configured in the same way for the same clock tick offers the advantage of greatly simplifying the central switching stage, which may be made up of J sub-stages operating in parallel and in a synchronized manner, which sub-stages are controlled by the same routing command. Another advantage results from constructing groups of data sets in a cycle, which makes it possible to facilitate control of the sharing of the routing capacity between the inlet and outlet sub-stages by reducing the number of items of information to be managed in a cycle: NxN items of data in M clock ticks instead of NxM items of data without construction of said sets (in practice M>N).

The apparatus of the invention may have other characteristics that may be taken separately or in combination, and, in particular:
- each inlet sub-stage may, for example, comprise:
   - at the most K inlet interfaces, each of which has at least one inlet and one outlet;
   - an inlet routing module having K inlets connected to respective ones of the outlets of the at the most K inlet interfaces and J outlets; and
   - J inlet interfacing modules, each of which has an inlet connected to one of the J outlets of the inlet routing module, one outlet and Q inlet sub-modules, each of which serves for temporarily storing data sets to be routed whose destination is one of the outlet sub-stages and for delivering at each clock tick (or period) a data set that is to be part of a group;
   - the inlet routing module then serving to route data sets coming from one of the at the most K inlet interfaces to one of the J inlet interfacing modules;

   ➢ each inlet routing module may serve, on receiving instructions, to route during a cycle a substantially equal number of sets, coming from said outlet interfaces and whose destination is the same outlet sub-stage, to each of the inlet interfacing modules;
- each outlet sub-stage may, for example, comprise:
   - J outlet interfacing modules, each of which has an inlet connected to one of the Q outlets of one of the J routing blocks, one outlet and P outlet sub-modules, each of which is suitable for temporarily storing data sets to be post-routed, coming from groups;
   - an outlet routing module having J inlets connected to respective ones of the J outlets of the J outlet interfacing modules and at the most P outlets; and
   - at the most P outlet interfaces, each of which has one inlet and at least one outlet;
   - the outlet routing module then serving to route data sets stored in one of the P outlet sub-modules of one of the J outlet interfacing modules to one of the at the most P outlet interfaces;
- the first stage may serve to break down each data packet that it receives into at least one data set serving to constitute (or to participate in constituting) a group;
   ➢ the third stage may serve to reconstruct each data packet initially received and then broken down by said first stage, on the basis of at least one data set received from the second stage;
   ➢ the first stage may serve to construct data super-sets on the basis of at least two data sets, and to construct groups on the basis of J super-sets;

   - the third stage may be arranged to reconstruct each data packet initially received and broken down by said first stage, on the basis of a portion of at least one data super-set received from the second stage;
- M is preferably greater than or equal to N;
- J is, for example equal to N;
- J is, for example, equal to P;
- Q is, for example, equal to N;
- K is, for example, equal to J; and
- the first and third stages may optionally be grouped together in an inlet/outlet interfacing stage in which the inlets and the outlets are dissociated physically.

The invention also provides a node for a communications network, which node is equipped with an item of routing apparatus of the above-described type.

The invention is particularly well, although not exclusively, adapted to core networks for carrying packets.

Other characteristics and advantages of the invention appear on examining the following detailed description, and the accompanying drawings, in which:
- Figure 1 is a block diagram highly diagrammatically and functionally showing a first embodiment of routing apparatus of the invention;
- Figure 2 is a block diagram highly diagrammatically and functionally showing a second embodiment of routing apparatus of the invention;
- Figure 3 is a block diagram highly diagrammatically and functionally showing an embodiment of an inlet sub-stage of a first stage of routing apparatus of the type shown in Figure 1;
- Figure 4 is a block diagram highly diagrammatically and functionally showing an embodiment of an outlet sub-stage of a third stage of routing apparatus of the type shown in Figure 1;
- Figure 5 is a block diagram highly diagrammatically and functionally showing the connections between the inlet sub-stages of the first stage shown in Figure 3, the outlet sub-stages of the third stage shown in Figure 4, and the routing blocks of a second stage;
- Figure 6 is a block diagram highly diagrammatically showing an example of routing of a first group of data sets between the first buffer memories of a first inlet sub-stage shown in Figure 5, and the buffer memories of a first outlet sub-stage of the third stage shown in Figure 5, via the routing blocks of the second stage shown in Figure 5; and
- Figure 7 is a block diagram highly diagrammatically showing an example of routing of a second group of data sets between the second buffer memories of a first inlet sub-stage of the first stage shown in Figure 5, and the buffer memories of a second outlet sub-stage of the third stage shown in Figure 5, via the routing blocks of the second stage shown in Figure 5.

The accompanying drawings may serve not only to supplement the description of the invention, but also to contribute to defining said invention, where appropriate.

An object of the invention is to make it possible to route data packets at very high data rates by means of routing apparatus that is easy to control and thus to configure, thus enabling the passband to be used efficiently.

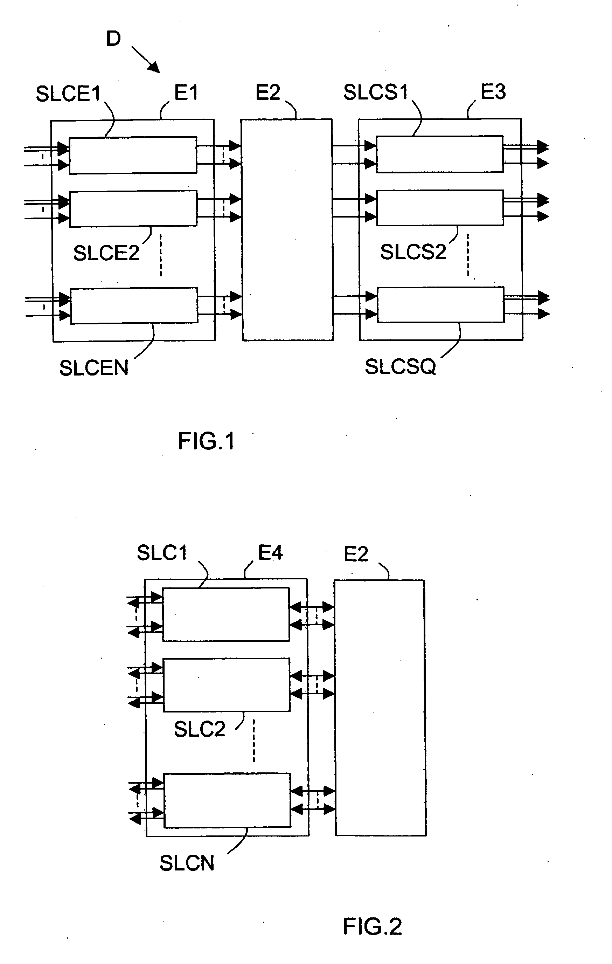

Reference is made firstly to Figure 1 for presenting routing apparatus D of the invention that may be installed in a packet switching or packet routing node, such as, for example, an IP router or an Ethernet switch, of a communications network requiring high-capacity nodes (such as, for example, but not exclusively, a core network).

Routing apparatus D comprises first, second, and third stages E1, E2, and E3.

The first stage E1 serves to pre-route to its outlets the data that it receives at its inlets in the form of packets. It comprises N inlet sub-stages SLCEn (n = 1 to N) which are mutually parallel and each of which has inlets and J outlets. For example, N is equal to 32. But N may take any value greater than or equal to 2. For example J is equal to 32. But J may take any value greater than or equal to 2. A particular nonlimiting embodiment consists in choosing J equal to N.

As explained below, each inlet sub-stage SLCEn constitutes a "super line card".

The second stage E2 serves to route to its J×Q outlets the pre-routed data that it receives at its N×J inlets from the N inlet sub-stages SLCEn.

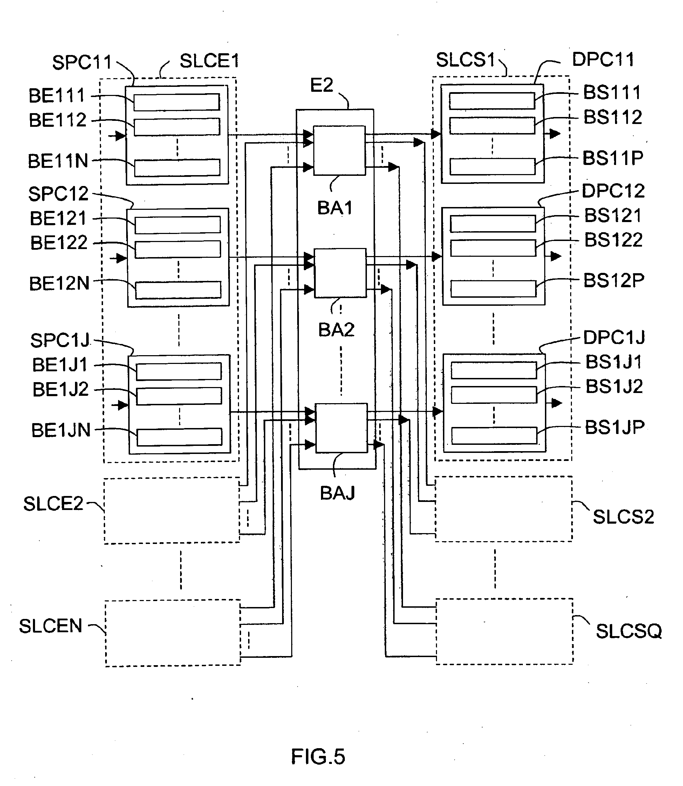

As is shown in Figures 5 to 7, the second stage E2 comprises J routing blocks BAj (j = 1 to J) which are mutually parallel and each of which has at least N inlets and at least Q outlets. Q is preferably equal to N. But this is not an obligation. It is possible to have Q different from N.

The third stage E3 serves to "post-route" to its outlets the data that has been routed by the second stage E2 and that it receives at its inlets. It comprises Q outlet sub-stages SLCSq (q = 1 to Q) which are mutually parallel and each of which has J inlets and outlets. The number of outlets of each outlet sub-stage SLCSq may be equal to or different from the number of inlets of each inlet sub-stage SLCEn. Preferably, N is equal to Q, but this is not obligatory. Below, it is assumed that N is equal to Q (by way of example).

The first stage E1 serves more precisely to construct periodically N groups of J data sets (or data cells) with data sets that are respectively waiting to be routed inside the N inlet sub-stages SLCEn and that are to be routed to the Q outlet sub-stages SLCSq. The J data sets that make up each group all have the same size (in terms of number of bits).

It is important to note that a data set may be constituted by a fraction of a received data packet or by a plurality of received packet fractions.

The first stage E1 also serves to distribute the J sets of each group that it has constructed, which sets thus come from the same inlet sub-stage SLCEn and are to be routed to one of the Q outlet sub-stages SLCSq, to the J routing blocks BAj of the second stage E2, so that said routing blocks may route them in parallel and in a synchronized manner to the destination outlet sub-stage SLCSq. For this purpose, the second stage E2 has control means (not shown) that serve to place the J routing blocks BAj in the same routing configuration adapted to routing the J sets of each of the N groups simultaneously and in a synchronized manner. The control means of the apparatus D may, if the routing so requires, modify the routing configuration of the J routing blocks BAj during each of the M periods of each cycle so that each of the N inlet sub-stages SLCEn may transfer a group of J sets to at the most one of the Q outlet sub-stages SLCSq (during each period).

It is important to note that the first and third stages E1 and E3 are not obligatorily dissociated physically, as they are in the example shown in Figures 1 and 3 to 7. They may be part of a single inlet/outlet interfacing stage E4 as shown in Figure 2. In which case, as shown, the inlet/outlet interfacing stage E4 may be made up of cards on which the inlets and the outlets are dissociated physically and are connected to transmission lines and thus define inlet ports and outlet ports.

In order to make the description easier to understand, it is specified that:
- in the general case, N designates the number of inlet sub-stages SLCEn. When N is equal to Q, N designates the maximum number of groups of data sets that are routed in parallel and in a synchronized manner by the second stage E2 during each of the M periods (or clock ticks) of each cycle. If N is different from Q, this maximum number is given by min(N,Q);
- J designates the number of data sets that each group to be routed comprises; and
- M designates the number of periods (or clock ticks) of each cycle, each period making it possible to route up to N (if N=Q) or min(N,Q) (if N is different from Q) groups of J sets in parallel and in a synchronized manner.

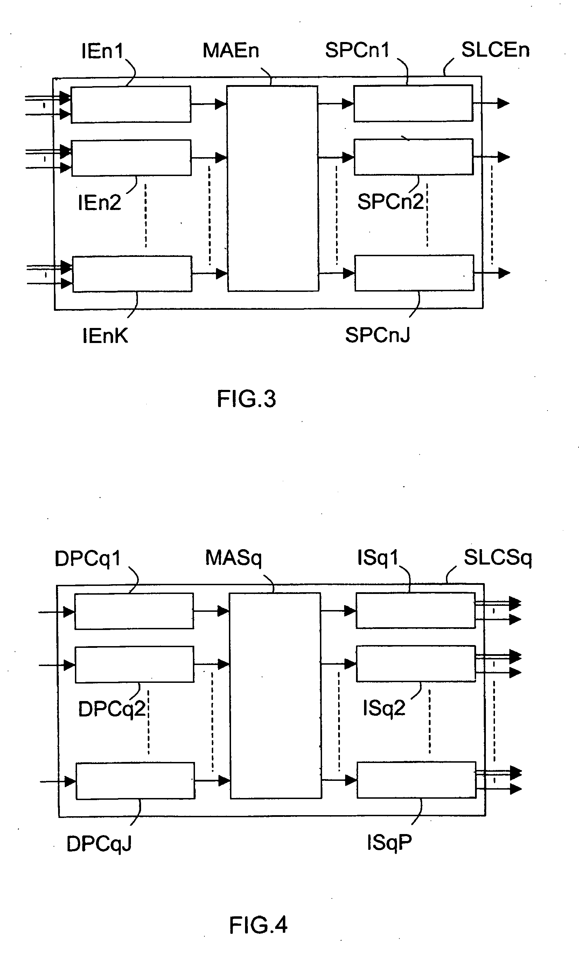

Embodiments and examples of operation of the three stages E1, E2, and E3 are described in more detail with reference to Figures 3 to 7 when said stages are part of routing apparatus of the type shown in Figure 1. Naturally, all of what is described below is transposable to routing apparatus of the type shown in Figure 2, subject to a few adaptations being made as indicated.

Figure 3 shows an embodiment of an inlet sub-stage SLCEn of a first stage E1 (of the N that it comprises).

This inlet sub-stage SLCEn includes firstly at the most K inlet interfaces IEnk (k = 1 to K) which are mutually parallel and each of which has one or more inlets (each of which defines an inlet port) and one outlet. Each inlet interface IEnk is, for example, a line card offering, for example, a data rate of about 10 Gbps.

In the example shown in the figures, each inlet sub-stage SLCEn has K inlet interfaces IEnk.

In addition, each inlet interface IEnk may, for example, serve to break down each data packet that it receives into at least one data set that is to constitute or to participate in constituting a group that is to be routed by the second stage E2. Each inlet interface may be optionally arranged to combine the data from at least two sets in order to constitute a subset serving to constitute or to participate in constituting a group that is to be routed by the second stage E2. Any technique for constructing data sets or subsets that is known to the person skilled in the art may be used, and in particular the technique described in Patent Document FR 2 864 395.

By means of this breaking down, optionally followed by recombination, it is thus possible to construct sets that always comprise substantially the same number of data items (or indeed that are empty), thereby making it possible to take account of the fact that the received data packets do not always comprise the same number of payload data items. It is also possible to construct super-sets (or super-cells) on the basis of sets (of constant size) in order to adapt the data rate as a function of needs.

The inlet sub-stage SLCEn also includes an inlet routing module MAEn having at the most K inlets, connected to respective ones of the outlets of the at the most K inlet interfaces IEnk, and J outlets. This inlet routing module MAEn serves to pre-route the data ((super-)sets) that it receives at any one of its at the most K inlets to any one of its J outlets as a function of configuration instructions received from the control means of the apparatus D.

For example, when J = 32, when K=J inlet interfaces IEnk are used, and when each inlet interface IEnk offers a data rate of 10 Gbps, the inlet routing module MAEn offers a data rate of 320 Gbps. It should be noted that the case J=K is not an obligation.

In the case of routing apparatus D of the type shown in Figure 2, the inlet routing module MAEn must perform both the pre-routing and the post-routing. It must thus offer a data rate that is twice the data rate mentioned above (e.g. 2x320 Gbps).

The inlet sub-stage SLCEn also includes J inlet interfacing modules SPCnj (j = 1 to J) which are mutually parallel and each of which is connected to a respective one of the J outlets of the inlet routing module MAEn, one outlet, and Q inlet sub-modules BEnjq (n = 1 to N and q = 1 to Q).

Each inlet sub-module BEnjq serves to store temporarily data (super-)sets that are to be routed by the second stage E2 and whose destination is one of the outlet sub-stages SLCSq (having the same value of q).

These (super-)sets come from the at the most K inlet interfaces IEnk via the inlet routing module MAEn.

In order to avoid wasting passband during the above-described construction of the groups of sets, the inlet routing module MAEn may share the load whose destination is an outlet sub-stage SLCSq between the various inlet interfacing modules SPCnj of the inlet sub-stage SLCEn.

For this purpose, during a given cycle, the inlet routing module MAEn receives instructions from the control means of the apparatus D requesting it to share out the data sets coming from all of the inlet interfaces IEnk and whose destination is the same outlet sub-stage SLCSq over the entire set of inlet sub-modules BEnjq, so that substantially the same number of sets are stored at each of said inlet sub-modules BEnjq (j= 1 to J), typically with a difference of at the most one.

The Q inlet sub-modules BEnjq of each inlet interfacing module SPCnj are preferably controlled by the control means that manage the configuration of the J routing blocks BAj of the second stage E2. Thus, during each of the M periods of a cycle, all of the inlet sub-modules BEnjq that belong to the J inlet interfacing modules SPCnj of the same inlet sub-stage SLCEn and having the same value of n are caused by the control means to deliver the respective data sets (or super-sets) that they are storing at the heads of the queues.

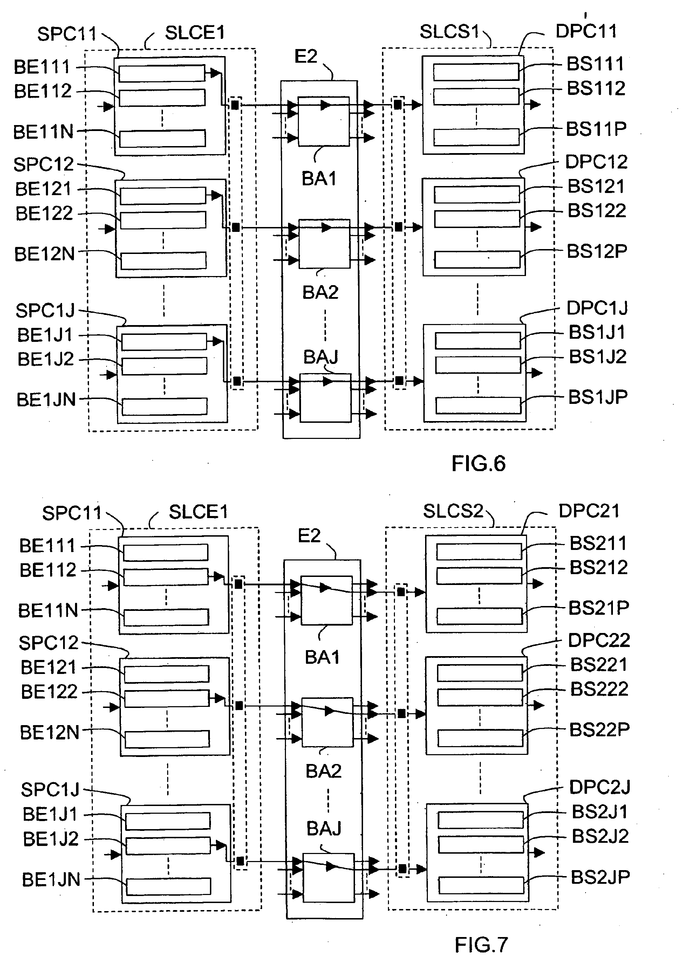

For example, and as shown in Figure 6, during a cycle, the control means firstly, during a first period, cause the J inlet sub-modules BEnj1 (of each inlet sub-stage SLCEn) to deliver substantially simultaneously J (super-)sets that constitute a group to be routed. N groups of J sets are thus obtained in parallel. Then, as shown in Figure 7, during the next period of the same cycle, the control means cause the J inlet sub-modules BEnj2 (of each inlet sub-stage SLCEn) to deliver substantially simultaneously J (super-)sets that constitute another group to be routed. N other groups of J sets are thus obtained in parallel. And so on until the cycle is finished and thus until the JxQ inlet sub-modules BEnjq of each inlet sub-stage SLCEn have delivered the head (super-)sets that they are storing and thus until M groups have been constructed by each inlet sub-stage SLCEn.

Thus, during a cycle of M periods, each inlet sub-stage SLCEn sends up to M groups of sets, including Mnq (designating a number less than or equal to M) to the outlet sub-stage SLCSq, and each outlet sub-stage SLCSq receives up to M groups of sets, including Mnq from the inlet sub-stage SLCEn. The control means of the apparatus D fix the necessary values for Mnq at each cycle, as a function of the needs for data interchange between the inlets and the outlets, it being possible for these values to change from one cycle to the next.

For example, the inlet sub-modules BEnjq are implemented in the form of buffer memories of the First In First Out (FIFO) type.

It is important to note that, at any given instant, the J inlet sub-modules BEnjq, that have the same value of q within an inlet sub-stage SLCEn are not necessarily all storing one data (super-)set. Therefore, when an inlet sub-module BEnjq is not storing any (super-)sets), it delivers to the routing block BAj an empty (super-)set or indeed a (super-)set containing padding data.

Each inlet interfacing module SPCnj has an outlet offering, for example, a data rate of 10 Gbps.

In the above-described embodiment, each inlet sub-stage SLCEn constitutes a super line card made up in particular of at the most J line cards. Thus, when J is equal to 32 and when each line card offers a data rate of 10 Gbps, each super line card SLCEn offers a data rate of 320 Gbps.

As shown in Figures 5 to 7, each routing block BAj of the second stage E2 has N inlets connected to respective ones of the outlets of the N inlet interfacing modules SPCnj that have the same value of j. For example, the routing block BA1 has N inlets connected to respective ones of the outlets of the N inlet interfacing modules SPCn1 of the N inlet sub-stages SLCEn, while the routing block BAJ has N inlets connected to respective ones of the outlets of the N inlet interfacing modules SPCnJ of the N inlet sub-stages SLCEn.

In addition, each routing block BAj of the second stage E2 has Q outlets (e.g. Q=N, but this is not obligatory).

By convention, the "nth" inlet is that inlet of a routing block BAj which is connected to the inlet sub-stage SLCEn, and the "qth" outlet is that outlet of a routing block BAj which is connected to the outlet sub-stage SLCSq.

A routing block BAj is configurable in various routing configurations so that any of its N inlets may be caused to correspond to any of its Q outlets. During a period, a routing block BAj is suitable for receiving up to N data sets at its N inlets and for routing said data sets to its outlets. Preferably, a routing block BAj is suitable for managing contention between the data sets whose destination is the same outlet. For this purpose, it is possible to use, for example, a switching matrix having a memory.

As shown in Figures 6 and 7, every time that J (super-)sets of a group are extracted from the J inlet sub-modules BEnjq (for a given value of q, e.g. q = 1 (Figure 6) or q = 2 (Figure 7)) of an inlet sub-stage SLCEn (e.g. SLCE1), they reach the J nth (e.g. the first if n=1) inlets of the J routing blocks BAj, and are then routed internally simultaneously and in a synchronized manner, depending on their current configuration, in order to be delivered at respective ones of the J qth outlets of the J routing blocks BAj connected to the J inlets of the outlet sub-stage SLCSq (where q may be equal to n during one of the M periods of a cycle, q=1 in the example of Figure 6 and q=2 in the example of Figure 7).

Figure 4 shows an embodiment of an outlet sub-stage SLCSq of a third stage E3.

This outlet sub-stage SLCSq includes firstly J outlet interfacing modules DPCqj (j = 1 to J) which are mutually parallel and each of which has an inlet connected to one of the N outlets (namely the qth outlet) of one of the J routing blocks BAj, an outlet, and P outlet sub-modules BSnjp (p = 1 to P).

Each outlet sub-module BSnjp serves to store temporarily data (super-)sets that have been routed by the second stage E2 and that are to be post-routed to an outlet interface ISqp (having the same value of p) of its own outlet sub-stage SLCSq. Therefore, when a data set reaches the inlet of an outlet interfacing module DPCqj, it is routed (for storage purposes) to the outlet sub-module BSnjp that is associated with the outlet interface ISqp that is the destination of said data set. This routing (for storage purposes) may take place as a function of the items of information that are included in the header of the data set and that designate the destination outlet interface ISqp.

For example, the outlet sub-modules BSnjm are implemented in the form of buffer memories of the FIFO type.

When an outlet sub-module BSnjm receives from the second stage E2 a (super-)set that is empty (or that contains padding data only), it does not store it, because that (super-)set does not correspond to a packet received by the first stage E1.

Each outlet sub-stage SLCSq also includes an outlet routing module MASq having J inlets connected to respective ones of the J outlets of the J outlet interfacing modules DPCqj and to the at the most P outlets.

This outlet routing module MASq serves to post-route the data ((super-)sets) that it receives at any one of its J inlets to any one of its at the most P outlets as a function of configuration instructions received from the control means of the apparatus D.

At each period, data (super-)sets to be post-routed that are stored in the outlet sub-modules BSnjp are extracted as a function of the instructions received from the control means of the apparatus D, so as to feed the J inlets of the corresponding outlet routing module MASq, so as to be routed to the outlet interfaces ISqp (presenting the same value of p as a sub-module BSnjp). The reconstruction of the packets then takes place in the outlet interfaces ISqp.

The clocking of the third stage E3 is preferably identical to the clocking of the second stage E2. But this is not an obligation.

In the example shown in the figures, each outlet routing module MASq has as many inlets (J) as outlets (P=J). But this number P of outlets may be different from the number J of inlets.

In routing apparatus D of the type shown in Figure 2, the outlet routing module MASq coincides with the inlet routing module MAEn and must perform both the pre-routing and the post-routing. It must therefore offer a data rate that is twice as high.

As indicated above, the outlet sub-stage SLCSq also includes at the most P outlet interfaces ISqp (p = 1 to P) which are mutually parallel and each of which has an inlet connected to one of the outlets of the outlet routing module MASq and one or more outlets (each of which defines an outlet port). Each outlet interface ISqp is, for example, a line card offering a data rate of about 10 Gbps. In which case, the number P of outlet interfaces ISqp is equal to J and when J = 32, the outlet routing module MASq offers a data rate of 320 Gbps.

The number of outlets of each outlet interface ISqp may be equal to or different from the number of inlets of each inlet interface IEnk. In addition, the number P of outlet interfaces ISqp may be different from the number J of outlet interfacing modules DPCqj.

When the second stage E2 serves to route groups of data (super-)sets, each outlet interface ISqp serves to reconstruct one or more data packets on the basis of at least a portion of at least one data (super-)set that it receives from the outlet routing module MASq. Any technique for reconstructing data packets from one or more portion(s) of data (super-)set(s) that is known to the person skilled in the art may be used, and in particular the technique that is described in Patent Document FR 2 864 395.

In the above-described embodiment, each outlet sub-stage SLCSq constitutes a super line card that is made up of, in particular, at the most J line cards. Thus, when J is equal to 32 and when each line card offers a data-rate of 10 Gbps, each super line card SLCSq offers a data rate of 320 Gbps. Therefore, by arranging in parallel N = 32 super line cards SLCEn and SLCSq offering 320 Gbps (at the inlet and at the outlet) and by using a second stage E2 having J routing (or switching) blocks BAj, a routing device D is obtained that offers a data rate of higher than 10 Tbps. Naturally, by acting on the respective values of J, N, Q and P, it is possible to obtain numerous other data rates that are greater than or less than 10 Tbps.

The invention is not limited to the embodiments of routing apparatus and nodes that are described above, merely by way of example, but rather it encompasses all variants that may be devised by the person skilled in the art within the ambit of the following claims.

## Claims

1. Data packet routing apparatus (D) for a node of a communications network, which apparatus comprises: i) a first stage (E1) comprising N parallel inlet sub-stages (SLCEn), each of which serves to pre-route to J outlets of said inlet sub-stage data received at the inlets in the form of packets; ii) a second stage (E2) comprising J parallel routing blocks (BAj), each of which serves to route to at least Q outlets pre-routed data received at at least N inlets; and a third stage (E3) comprising Q parallel outlet sub-stages (SLCSq), each of which serves to post-route to outlets routed data received at J inlets of said outlet sub-stage; said data-packet routing apparatus being **characterized in that** said first stage (E1) is arranged to act over cycles comprising M periods to construct groups of data sets, one group including J data sets waiting to be routed within the same inlet sub-stage (SLCEn) and whose destination is one of said outlet sub-stages (SLCSq), and to distribute the J sets of each group, having the same inlet sub-stage and the same outlet sub-stage, to said J routing blocks (BAj) all placed in the same routing configuration, so that they route them in parallel and in a synchronized manner to a destination outlet sub-stage, said data-packet routing apparatus being capable of modifying said routing configuration of the J routing blocks (BAj) at every period so that, during a cycle of M periods, each of said outlet sub-stages (SLCSq) may receive all of the groups of data sets that it is to post-route.

2. Apparatus according to claim 1, **characterized in that** each inlet sub-stage (SLCEn) comprises: i) at the most K inlet interfaces (IEnk), each of which has at least one inlet and one outlet; ii) an inlet routing module (MAEn) having at the most K inlets connected to respective ones of the outlets of the at the most K inlet interfaces (IEnk) and J outlets; and iii) J inlet interfacing modules (SPCnj) each of which has an inlet connected to one of the J outlets of said inlet routing module (MAEn), one outlet and Q inlet sub-modules (BEnjq) each of which is suitable for temporarily storing data sets to be routed whose destination is one of said outlet sub-stages (SLCSq) and for delivering at each period of a cycle a data set that is to be part of a group, and **in that** each inlet routing module (MAEn) is arranged to route data sets coming from one of said at the most K inlet interfaces (IEnk) to one of said J inlet interfacing modules (SPCnj).

3. Apparatus according to claim 2, **characterized in that** said inlet routing module (MAEn) is arranged, on receiving instructions, to route during a cycle a substantially equal number of sets, coming from said outlet interfaces (IEnk) and whose destination is the same outlet sub-stage (SLCSq), to each of the inlet interfacing modules (SPCnj).

4. Apparatus according to any one of claims 1 to 3, **characterized in that** each outlet sub-stage (SLCSq) comprises: i) J outlet interfacing modules (DPCqj) each of which has an inlet connected to one of the Q outlets of one of the J routing blocks (BAj), one outlet and P outlet sub-modules (BSnjm) each of which is suitable for temporarily storing data sets to be post-routed, coming from groups; ii) an outlet routing module (MASq) having J inlets connected to respective ones of the J outlets of the J outlet interfacing modules (DPCqj) and at the most P outlets; and iii) at the most P outlet interfaces (ISqp) each of which has one inlet and at least one outlet, and **in that** each outlet routing module (MASq) is arranged to route data sets stored in one of said P outlet sub-modules (BSnjm) of one of said J outlet interfacing modules (DPCqj) to one of said at the most P outlet interfaces (ISqp).

5. Apparatus according to any one of claims 1 to 4, **characterized in that** said first stage (E1) is arranged to break down each data packet that it receives into at least one data set serving to constitute a group.

6. Apparatus according to claim 5, **characterized in that** said third stage (E3) is arranged to reconstruct each data packet initially received and then broken down by said first stage (E1), on the basis of at least one data set received from said second stage (E2).

7. Apparatus according to any one of claims 1 to 6, **characterized in that** said first stage (E1) is arranged to construct data super-sets on the basis of at least two data sets and to construct groups on the basis of J super-sets.

8. Apparatus according to claim 7, **characterized in that** said third stage (E3) is arranged to reconstruct each data packet initially received and broken down by said first stage (E1), on the basis of a portion of at least one data super-set received from said second stage (E2).

9. Apparatus according to any one of claims 1 to 8, **characterized in that** M is greater than or equal to N.

10. Apparatus according to any one of claims 1 to 9, **characterized in that** Q is equal to N.

11. Apparatus according to any one of claims 1 to 10, **characterized in that** J is equal to N.

12. Apparatus according to any one of claims 1 to 11, **characterized in that** equal to J.

13. Apparatus according to any one of claims 1 to 12, **characterized in that** J is equal to P.

14. Apparatus according to any one of claims 1 to 13, **characterized in that** said first and third stages (E1 and E3) are grouped together in an inlet/outlet interfacing stage (E4) in which said inlets and said outlets are dissociated physically.

15. A node for a communications network, **characterized in that** it includes at least one item of routing apparatus (D) according to any preceding claim.

## Patentansprüche

1. Vorrichtung zur Leitweglenkung von Datenpaketen (D) für einen Knoten eines Kommunikationsnetzwerkes, wobei die Vorrichtung umfasst: i) eine erste Stufe (E1), welche N parallele Eingangs-Unterstufen (SLCEn) umfasst, von denen eine jede dazu dient, an den Eingängen in der Form von Paketen empfangene Daten an J Ausgänge der besagten Eingangs-Unterstufe vorzurouten; ii) eine zweite Stufe (E2), welche J parallele Routingblöcke (BAj) umfasst, von denen ein jeder dazu dient, an mindestens N Eingängen empfangene vorgeroutete Daten an mindestens Q Ausgänge zu routen; und eine dritte Stufe (E3), welche Q parallele Ausgangs-Unterstufen (SLCSq) umfasst, von denen eine jede dazu dient, an J Eingängen der besagten Ausgangs-Unterstufe empfangene geroutete Daten an Ausgänge nachzurouten; wobei die Vorrichtung zur Leitweglenkung der besagten Datenpakete **dadurch gekennzeichnet ist, dass** die besagte erste Stufe (E1) ausgestaltet ist, um über Zyklen mit M Perioden zu bewirken, dass Datensatzgruppen zusammengestellt werden, wobei eine Gruppe J Datensätze umfasst, welche darauf warten, innerhalb derselben Eingangs-Unterstufe (SLCEn) geroutet zu werden, und deren Ziel eine der besagten Ausgangs-Unterstufen (SLCSq) ist, und um die J Sätze einer jeden Gruppe, welche dieselbe Eingangs-Unterstufe und dieselbe Ausgangs-Unterstufe haben, an die besagten J Routingblöcken (BAj), welche alle in derselben Routing-Konfiguration angeordnet sind, zu verteilen, so dass sie diese parallel und synchron an eine Ziel-Ausgangs-Unterstufe routen, wobei die besagte Vorrichtung zur Leitweglenkung von Datenpaketen fähig ist, die besagte Routing-Konfiguration der J Routingblöcke (BAj) in jeder Periode zu ändern, so dass, während eines Zyklus von M Perioden, eine jede der besagten Ausgangs-Unterstufen (SLCSq) alle Gruppen von Datensätzen empfangen kann, welche sie nachrouten soll.

2. Vorrichtung nach Anspruch 1, **dadurch gekennzeichnet, dass** jede Eingangs-Unterstufe (SLCEn) umfasst: i) höchstens K Eingangsschnittstellen (IEnk), von denen eine jede mindestens einen Eingang und einen Ausgang aufweist; ii) ein Eingangs-Routingmodul (MAEn), welches höchstens K Eingänge aufweist, die an die entsprechenden der jeweiligen Ausgänge der höchstens K Eingangsschnittstellen (IEnk) und J Ausgänge angeschlossen sind; und iii) J Eingangsschnittstellen-Module (SPCnj), von denen ein jedes einen an einen der J Ausgänge des besagten Eingangsrouting-Moduls (MAEn) angeschlossenen Eingang, einen Ausgang und Q Eingangs-Untermodule (BEnjq) aufweist, von denen ein jedes fähig ist, Datensätze, die geroutet werden sollen und deren Ziel eine der besagten Ausgangs-Unterstufen (SLCSq) ist, temporär zu speichern und in jeder Periode eines Zyklus einen Datensatz, welcher Bestandteil einer Gruppe sein soll, zu senden, und dass jedes Eingangsrouting-Modul (MAEn) ausgestaltet ist, um Datensätze, die von einem der besagten höchstens K Eingangsschnittstellen (IEnk) kommen, an eines der besagten J Eingangsschnittstellen-Modul (SPCnj) zu routen.

3. Vorrichtung nach Anspruch 2, **dadurch gekennzeichnet, dass** das besagte Eingangsrouting-Modul (MAEn) ausgestaltet ist, bei Empfang von Befehlen innerhalb eines Zyklus eine annähernd gleichwertige Anzahl von Datensätzen, welche von den besagten Ausgangsschnittstellen (IEnk) kommen und deren Ziel dieselbe Ausgangs-Unterstufe (SLCSq) ist, an ein jedes der Eingangsschnittstellen-Module (SPCnj) zu routen.

4. Vorrichtung nach einem beliebigen der Ansprüche 1 bis 3, **dadurch gekennzeichnet, dass** jede Ausgangs-Unterstufe (SLCSq) umfasst: i) J Ausgangsschnittstellen-Module (DPCqj), von denen ein jedes einen Eingang, welcher an einen der Q Ausgänge eines der J Routingblöcke (BAj) angeschlossen ist, einen Ausgang und P Ausgangs-Untermodule (BSnjm), von denen ein jedes fähig ist, nachzuroutende Datensätze, die von Gruppen kommen, temporär zu speichern, aufweist; ii) ein Ausgangsrouting-Modul (MASq) mit J Eingängen, welche an die entsprechenden der J Ausgänge der J Ausgangsschnittstellen-Module (DPCqj) und an höchstens P Ausgänge angeschlossen sind; und iii) höchstens P Ausgangsschnittstellen (ISqp), von denen eine jede einen Eingang und mindestens einen Ausgang aufweist, und dass jedes Ausgangsrouting-Modul (MASq) fähig ist, in einem der besagten P Ausgangs-Untermodulen (BSnjm) eines der besagten J Ausgangsschnittstellen-Module (DPCqj) gespeicherte Datensätze an eine der besagten höchstens P Ausgangsschnittstellen (ISqp) zu routen.

5. Vorrichtung nach einem beliebigen der Ansprüche 1 bis 4, **dadurch gekennzeichnet, dass** die besagte erste Stufe (E1) ausgestaltet ist, um jedes von ihr empfangene Datenpaket in mindestens einen Datensatz zu zerlegen, welcher dazu dient, eine Gruppe zu bilden.

6. Vorrichtung nach Anspruch 5, **dadurch gekennzeichnet, dass** die besagte dritte Stufe (E3) ausgestaltet ist, um jedes ursprünglich empfangene und anschließend von der besagten ersten Stufe (E1) zerlegte Datenpaket auf der Basis von mindestens einem von der besagten zweiten Stufe (E2) empfangenen Datensatz zu neu zusammenzustellen.

7. Vorrichtung nach einem beliebigen der Ansprüche 1 bis 6, **dadurch gekennzeichnet, dass** die besagte erste Stufe (E1) ausgestaltet ist, um Daten-Supersätze auf der Basis von mindestens zwei Datensätzen zusammenzustellen, und um auf der Basis von J Supersätzen Gruppen zu zusammenzustellen.

8. Vorrichtung nach Anspruch 7, **dadurch gekennzeichnet, dass** die besagte dritte Stufe (E3) ausgestaltet ist, um jedes ursprünglich empfangene und von der besagten ersten Stufe (E1) zerlegte Datenpaket auf der Basis einer Portion von mindestens einem von der besagten zweiten Stufe (E2) empfangenen Daten-Supersatz neu zusammenzusetzen.

9. Vorrichtung nach einem beliebigen der Ansprüche 1 bis 8, **dadurch gekennzeichnet, dass** M größer als oder gleich N ist.

10. Vorrichtung nach einem beliebigen der Ansprüche 1 bis 9, **dadurch gekennzeichnet, dass** Q gleich N ist.

11. Vorrichtung nach einem beliebigen der Ansprüche 1 bis 10, **dadurch gekennzeichnet, dass** J gleich N ist.

12. Vorrichtung nach einem beliebigen der Ansprüche 1 bis 11, **dadurch gekennzeichnet, dass** (manque) gleich J ist.

13. Vorrichtung nach einem beliebigen der Ansprüche 1 bis 12, **dadurch gekennzeichnet, dass** J gleich P ist.

14. Vorrichtung nach einem beliebigen der Ansprüche 1 bis 13, **dadurch gekennzeichnet, dass** die besagte erste und die besagte dritte Stufe (E1 und E3) in einer Eingangs-/Ausgangs-Schnittstellenstufe (E4), in welcher die besagten Eingänge physikalisch getrennt sind, zusammengefügt werden.

15. Ein Knoten für ein Kommunikationsnetzwerk, **dadurch gekennzeichnet, dass** er mindestens ein Element der Leitweglenkungsvorrichtung (D) gemäß einem beliebigen der vorstehenden Ansprüche umfasst.

## Revendications

1. Dispositif d'aiguillage de paquets de données (D) pour un noeud d'un réseau de communication, comportant i) un premier étage (E1) comprenant N sous-étages d'entrée (SLCEn) parallèles chargés chacun de pré-aiguiller vers J sorties dudit sous-étage d'entrée des données reçues sur des entrées sous forme de paquets, ii) un deuxième étage (E2) comprenant J blocs d'aiguillage (BAj) parallèles chargés chacun d'aiguiller vers au moins Q sorties des données pré-aiguillées reçues sur au moins N entrées, et un troisième étage (E3) comprenant Q sous-étages de sortie (SLCSq) parallèles chargés chacun de post-aiguiller vers des sorties des données aiguillées reçues sur J entrées dudit sous-étage de sortie, **caractérisé en ce que** ledit premier étage (E1) est agencé pour constituer sur des cycles, comprenant M périodes, des groupes d'ensembles de données, un groupe incluant J ensembles de données en attente d'aiguillage au sein d'un même sous-étage d'entrée (SLCEn) et destinés à l'un desdits sous-étages de sortie (SLCSq), et pour distribuer les J ensembles de chaque groupe, ayant un même sous-étage d'entrée et un même sous-étage de sortie, auxdits J blocs d'aiguillage (BAj) tous placés dans une même configuration d'aiguillage, de sorte qu'ils les aiguillent en parallèle et de façon synchronisée vers un sous-étage de sortie destinataire, ladite configuration d'aiguillage des J blocs d'aiguillage (BAj) pouvant être modifiée à chaque période de sorte qu'au cours d'un cycle de M périodes chacun desdits sous-étages de sortie (SLCSq) puisse recevoir tous les groupes d'ensembles de données qu'il doit post-aiguiller.

2. Dispositif selon la revendication 1, **caractérisé en ce que** chaque sous-étage d'entrée (SLCEn) comprend i) au plus K interfaces d'entrée (IEnk) comportant chacune au moins une entrée et une sortie, ii) un module d'aiguillage d'entrée (MAEn) comprenant au plus K entrées connectées respectivement aux sorties des au plus K interfaces d'entrée (IEnk) et J sorties, et iii) J modules d'interfaçage d'entrée (SPCnj) comportant chacun une entrée connectée à l'une des J sorties dudit module d'aiguillage d'entrée (MAEn), une sortie et Q sous-modules d'entrée (BEnjq) propres chacun à stocker temporairement des ensembles de données à aiguiller destinés à l'un desdits sous-étage de sortie (SLCSq) et à délivrer à chaque période d'un cycle un ensemble de données destiné à faire partie d'un groupe, et **en ce que** chaque module d'aiguillage d'entrée (MAEn) est agencé pour aiguiller des ensembles de données provenant de l'une desdites au plus K interfaces d'entrée (IEnk) vers l'un desdits J modules d'interfaçage d'entrée (SPCnj).

3. Dispositif selon la revendication 2, **caractérisé en ce que** ledit module d'aiguillage d'entrée (MAEn) est agencé, à réception d'instructions, pour aiguiller au cours d'un cycle un nombre sensiblement égal d'ensembles, provenant desdites interfaces de sortie (IEnk) et à destination d'un même sous-étage de sortie (SLCSq), vers chacun des modules d'interfaçage d'entrée (SPCnj).

4. Dispositif selon l'une des revendications 1 à 3, **caractérisé en ce que** chaque sous-étage de sortie (SLCSq) comprend i) J modules d'interfaçage de sortie (DPCqj) comportant chacun une entrée connectée à l'une des Q sorties de l'un des J blocs d'aiguillage (BAj), une sortie et P sous-modules de sortie (BSnjm) propres chacun à stocker temporairement des ensembles de données à post-aiguiller, issus de groupes, ii) un module d'aiguillage de sortie (MASq) comprenant J entrées connectées respectivement aux J sorties des J modules d'interfaçage de sortie (DPCqj) et au plus P sorties, et iii) au plus P interfaces de sortie (ISqp) comportant chacune une entrée et au moins une sortie, et **en ce que** chaque module d'aiguillage de sortie (MASq) est agencé pour aiguiller des ensembles de données stockés dans l'un desdits P sous-modules de sortie (BSnjm) de l'un desdits J modules d'interfaçage de sortie (DPCqj) vers l'une desdites au plus P interfaces de sortie (ISqp).

5. Dispositif selon l'une des revendications 1 à 4, **caractérisé en ce que** ledit premier étage (E1) est agencé pour décomposer chaque paquet de données qu'il reçoit en au moins un ensemble de données destiné à constituer un groupe.

6. Dispositif selon la revendication 5, **caractérisé en ce que** ledit troisième étage (E3) est agencé pour reconstituer chaque paquet de données, initialement reçu puis décomposé par ledit premier étage (E1), à partir d'au moins un ensemble de données reçu dudit deuxième étage (E2).

7. Dispositif selon l'une des revendications 1 à 6, **caractérisé en ce que** ledit premier étage (E1) est agencé pour constituer des sur-ensembles de données à partir d'au moins deux ensembles de données et pour constituer des groupes à partir de J sur-ensembles.

8. Dispositif selon la revendication 7, **caractérisé en ce que** ledit troisième étage (E3) est agencé pour reconstituer chaque paquet de données, initialement reçu puis décomposé par ledit premier étage (E1), à partir d'une partie d'au moins un sur-ensemble de données reçu dudit deuxième étage (E2).

9. Dispositif selon l'une des revendications 1 à 8, **caractérisé en ce que** M est supérieur ou égal à N.

10. Dispositif selon l'une des revendications 1 à 9, **caractérisé en ce que** Q est égal à N.

11. Dispositif selon l'une des revendications 1 à 10, **caractérisé en ce que** J est égal à N.

12. Dispositif selon l'une des revendications 1 à 11, **caractérisé en ce que** K est égal à J.

13. Dispositif selon l'une des revendications 1 à 12, **caractérisé en ce que** J est égal à P.

14. Dispositif selon l'une des revendications 1 à 13, **caractérisé en ce que** lesdits premier (E1) et troisième (E3) étages sont regroupés au sein d'un étage d'interfaçage d'entrée/sortie (E4) dans lequel lesdites entrées et lesdites sorties sont physiquement dissociées.

15. Noeud pour un réseau de communication, **caractérisé en ce qu'**il comprend au moins un dispositif d'aiguillage (D) selon l'une des revendications précédentes.
